Europäisches Patentamt

European Patent Office

Office européen des brevets

(11) Publication number: **0 377 327 B1**

## EUROPEAN PATENT SPECIFICATION

(45) Date of publication of patent specification: **05.01.94**  (51) Int. Cl.⁵: **H02P  9/10**

(21) Application number: **89313651.5**

(22) Date of filing: **28.12.89**

(54) **Generator voltage regulation with non-linear compensation.**

<table>
<tr><td>

(30) Priority: **29.12.88 US 290344**

(43) Date of publication of application:
**11.07.90 Bulletin  90/28**

(45) Publication of the grant of the patent:
**05.01.94 Bulletin  94/01**

(84) Designated Contracting States:
**DE FR GB IT**

(56) References cited:

**PATENT ABSTRACTS OF JAPAN vol. 8, no. 256 (E-280)(1693) 22 November 1984, & JP-A-59 127596 (NIPPON GENSHIRYOKU JIGYO K.K.) 23 July 1984,**

**IEE PROCEEDINGS B. ELECTRICAL POWER APPLICATIONS. vol. 135, no. 5, September 1988, STEVENAGE GB pages 231 - 239; C.D. Manning & al.: "New dynamic inductance concept and its application to synchronous machinemodelling"**

</td><td>

(73) Proprietor: **SUNDSTRAND CORPORATION**
**4949 Harrison Avenue**
**Rockford Illinois 61125- 7003(US)**

(72) Inventor: **Fox, David Alan**
**3810 Emma Parkway**
**Lima, Ohio 45806(US)**

(74) Representative: **Serjeant, Andrew Charles**
**25 The Crescent**
**King Street**
**Leicester, LE1 6RX (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to voltage regulation of electric generators and, more particularly, to a method and circuit for regulating the output voltage of an electric generator which is subject to varying loads and may be driven at varying speeds.

Typical voltage regulators which are used to regulate the output voltage of electric generators include a sensing circuit that produces a voltage signal proportional to the AC or DC output of the generator. This signal is subtracted from a reference signal to develop a signal proportional to the error in the generator output. A compensator modifies the gain of the voltage regulator control loop. The output of the compensator is amplified and used to control the exciter field current in the generator. The output of the generator is proportional to the exciter field current. The gain and response of each element in the control loop can be measured and the compensator can be designed to achieve the desired transient response in accordance with well known feedback control methods.

In certain electrical systems, such as those found in aircraft, the generator must operate over a wide speed range. Since the gain (ratio of the output voltage to exciter field current) of a generator is proportional to its rotational speed and decreases as load is applied, voltage regulators constructed as discussed above may produce an unacceptable transient response as a load is applied or removed from the generator at various speeds. For example, when a load is applied to a generator operating near the low end of its operating speed range, the generator output initially decreases and slowly recovers because the gain of the voltage control loop is relatively low. The gain cannot be significantly increased because a load removal at high speed would result in a seriously underdamped condition. There is a considerable difference in transient response over the required speed and load range. The present invention seeks to provide a voltage regulator which improves generator transient response over the expected operating speed and load range.

Japanese Patent No. 59127596 discloses a generator voltage regulator which includes a non-linear element in the control loop. The present invention discloses the use of a non-linear element having a special characteristic representative of the gain of the generator over an expected speed and load range. This compensates for gain variations in the generator due to changes in speed and load, thereby improving the overall transient response to the system. This invention encompasses a method of regulating the output voltage of an electric generator, including the steps of producing a first signal representative of the actual output of the generator, and combining the first signal with a reference signal to obtain a control signal which varies in proportion to the difference between the desired output of the generator and the actual output. The control signal is modified by a non-linear transfer function which is representative of the gain of the generator over an expected operating speed and load range, and the exciter field current of the generator is controlled in response to the resulting modified control signal, thereby causing the actual output to approach the desired output. The generator output may be either an output voltage or current, either of which could be AC or DC.

This invention also encompasses voltage regulating circuits which perform the above method. In the preferred embodiment, the non-linear transfer function is an exponential function of the control signal.

The invention will become more readily apparent from the following description of the preferred embodiment thereof, shown by way of example only, in the accompanying drawings wherein:

Figure 1 is a block diagram of a voltage regulator constructed in accordance with one embodiment of the present invention;

Figure 2 is a plot of the non-linear transfer function used in the preferred embodiment of the present invention;

Figure 3 is a graph illustrating the gain of the non-linear element in Figure 1; and

Figure 4 is a schematic diagram of a non-linear element used in the preferred embodiment of this invention.

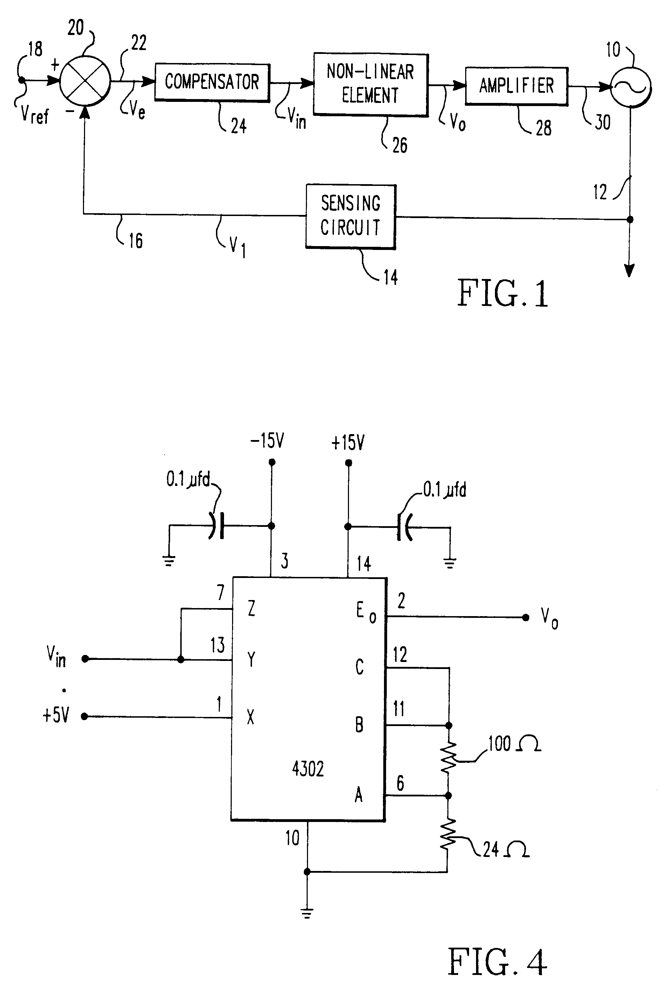

Referring to the drawings, Figure 1 is a block diagram of a generator and voltage regulator constructed in accordance with one embodiment of the present invention. A generator 10 is coupled to an external prime mover, not shown, which drives the generator at varying speeds. The generator produces a DC or AC output voltage on line 12. This voltage is sensed by sensing circuit 14 to produce a first voltage signal $V_1$ on line 16 which is representative of the generator output voltage. A reference voltage $V_{ref}$, which may be a DC voltage signal proportional to the desired output voltage of the generator, is supplied at point 18. The first voltage signal $V_1$ is subtracted from the voltage reference signal $V_{ref}$ at combination point 20 to produce an error signal $V_e$ on line 22. A compensator 24 receives the error signal and produces a control signal which serves as an input signal $V_{in}$ for the non-linear element 26. The transfer function of the non-linear element modifies the control signal $V_{in}$ to produce an output signal $V_o$. An amplifier 28 controls the

2

exciter field current of generator 10 via line 30 in response to the output signal of a non-linear element.

Except for the non-linear element 26, all of the elements in Figure 1 are found in existing voltage regulators. This invention adds the non-linear element, with the gain of that element being made to compensate for gain variations in the generator such that the total gain of the control loop is substantially constant over the operating speed and load range of the generator. The generator exciter field current, EFA, contains the information needed to determine the gain of the non-linear element. At low speeds and high loads, the EFA is high. At high speeds and light loads, the EFA is low. Thus the gain of the non-linear element should be proportional to the generator EFA. This gain is an incremental gain equivalent to the derivative of the transfer function at the operating point. Amplifier 28 controls the generator EFA such that it is proportional to $V_o$, the output of the non-linear element.

The ideal function for a non-linear compensator would be exponential. It is ideal because the derivative of the exponential function is proportional to the function itself. If the function is:

$$V_o = C \, e^{\left(\frac{V_{in}}{K}\right)} \qquad (1)$$

where K and C are constants, then:

$$G = \frac{dV_o}{dV_{in}} = \frac{C}{K} \, e^{\left(\frac{V_{in}}{K}\right)} = \frac{1}{K} \, V_o \qquad (2)$$

therefore, the gain is proportional to $V_o$ which is proportional to EFA. Unfortunately, available exponential function modules utilize a diode voltage-current characteristic, which is sensitive to temperature. Temperature drift in the compensator network is undesirable. Therefore, the preferred embodiment of this invention uses a function of the form:

$$V_o = \frac{V_{in}}{K}^n \qquad (3)$$

or

$$V_{in} = (KV_o)^{\frac{1}{n}} \qquad (4)$$

where K is a constant. Then,

$$G = \frac{dV_o}{dV_{in}} = \frac{n \frac{V_{in}}{K}^{n-1}}{K} = \frac{n}{K}(V_o K)^{\frac{n-1}{n}} = \frac{n \frac{V_o}{K^{\frac{(n-1)}{n}}}}{\frac{1}{K^n}} \tag{5}$$

$$G \propto V_o^{\frac{(n-1)}{n}} \propto EFA^{\frac{(n-1)}{n}} \tag{6}$$

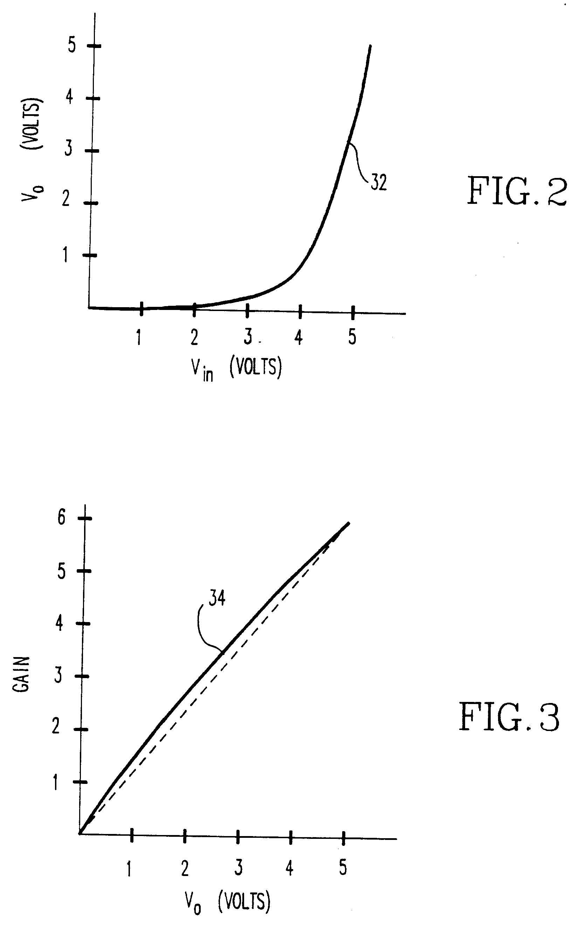

If $n$ is large, then the gain is approximately proportional to $V_o$ as desired. Figure 2 shows the transfer function 32 ($V_o$ versus $V_{in}$) of the non-linear element, and curve 34 in Figure 3 shows the gain versus $V_o$ for $n = 6$, which is readily available in integrated circuit functional modules. Note that the gain illustrated by curve 34 varies only slightly from a straight line proportional to $V_o$.

Figure 4 is a schematic diagram of the non-linear compensator element used in the preferred embodiment of this invention. The active element is a Burr-Brown 4302 Multifunction Converter connected to develop the transfer function:

$$E_o = Y \frac{Z}{X}^m \tag{7}$$

With $m = 5$, and a 5 volt reference input, the function is:

$$V_o = \frac{V_{in}^6}{5^5} \tag{8}$$

The gain is then:

$$G = 6\left(\frac{V_o}{5}\right)^{\frac{5}{6}} \tag{9}$$

which is the desired form.

By using the non-linear transfer function described above, the system response is improved for nearly all transient conditions. This results in consistent transient response over the required speed and load range. The insertion of a non-linear element is also compatible with existing sensing and amplifier circuits, and the technique of this invention is applicable to both AC and DC systems.

Although the present invention has been described in terms of what is at present believed to be its preferred embodiment, it will be apparent to those skilled in the art that various changes may be made without departing from the scope of the invention. For example, other transfer functions for the non-linear element can be developed with inputs for generator speed and load to further fine tune the system to meet specific requirements. In addition, although the preferred embodiment of this invention utilized generator output voltage sensing, output current sensing or a combination of current and voltage sensing may also be used. It is therefore intended that the appended claims cover such changes.

EP 0 377 327 B1

| IDENTIFICATION OF REFERENCE NUMERALS USED IN THE DRAWINGS | | |
|---|---|---|
| LEGEND | REF. NO. | FIGURE |
| SENSING CIRCUIT | 14 | 1 |
| COMPENSATOR | 24 | 1 |
| NON-LINEAR ELEMENT | 26 | 1 |
| AMPLIFIER | 28 | 1 |

**Claims**

1. A method of regulating the output voltage of a variable speed electric generator (10), said method comprising the steps of: producing a first signal $(V_1)$ representative of the actual output of the generator(10); and combining said first signal $(V_1)$ with a reference signal $(V_{ref})$ to obtain a control signal$(V_{in})$ which varies in proportion to the difference between a desired output of said generator and said actual output of said generator; including the steps of modifying said control signal $(V_{in})$ by a non-linear transfer function (32) and controlling the current in an exciter field winding of said generator (10) in response to the modified control signal $(V_o)$, thereby causing said actual output to approach said desired output; characterized by the transfer function being representative of the gain of said generator over an expected operating speed and load range of said generator.

2. The method of claim 1, further characterized in that said transfer function (32) is an exponential function.

3. The method of claim 1, further characterized in that said transfer function (32) is of the form

$$V_o = Ce^{V_{in}/K},$$

where $V_{in}$ is the control signal, $V_o$ is the modified control signal, and C and K are constants.

4. The method of claim 1, further characterized in that said transfer function (32) is of the form

$$V_o = V_{in}^n/K,$$

there $V_{in}$ is the control signal, $V_o$ is the modified control signal, and n and K are constants.

5. A voltage regulator for regulating the output voltage of a variable speed electric generator, said voltage regulator comprising: means (14) for producing a first signal $(V_1)$ representative of the actual output of a generator (10); and means(20) for combining said first signal $(V_1)$ with a reference signal $(V_{ref})$ to obtain a control signal $(V_{in})$ which varies in proportion to the difference between a desired output of said generator (10) and said actual output of said generator; including means (26) for modifying said control signal by a non-linear transfer function (32) and means (28) for controlling the current in an exciter field winding of said generator (10) in response to the modified control signal $(V_o)$, thereby causing said actual output to approach said desired output, characterized by the transfer function being representative of the gain of said generator over an expected operating speed and load range of said generator.

6. The voltage regulator of claim 5, further characterized in that said transfer function (32) is an exponential function.

7. The voltage regulator of claim 5 further characterized in that said transfer function (32) is of the form

$$V_o = Ce^{V_{in}/K},$$

5

where $V_{in}$ is the control signal, $V_o$ is the modified control signal, and C and K are constants.

8. The voltage regulator of claim 5, further characterized in that said transfer function (32) is of the form

$$V_o = V_{in}^n/K,$$

where $V_{in}$ is the control signal, $V_o$ is the modified control signal, and n and K are constants.

**Patentansprüche**

1. Verfahren zum Regeln der Ausgangsspannung eines Stromgenerators (10) mit variabler Drehzahl, das die Schritte umfaßt: Erzeugen eines ersten Signals ($V_1$), das die Ist-Ausgangsgröße des Generators (10) repräsentiert, und Kombinieren des ersten Signals ($V_1$) mit einem Referenzsignal ($V_{ref}$), um ein Steuersignal ($V_{in}$) zu erhalten, das sich im Verhältnis zu der Differenz zwischen einer Soll-Ausgangsgröße des Generators und der Ist-Ausgangsgröße ändert; mit den Schritten, das Steuersignal ($V_{in}$) mittels einer nichtlinearen Transferfunktion (32) zu modifizieren und den Strom in einer Erregerfeldwicklung des Generators (10) auf das modifizierte Steuersignal ($V_o$) hin zu steuern, wodurch die Ist-Ausgangsgröße dazu gebracht wird, sich der Soll-Ausgangsgröße zu nähern, dadurch gekennzeichnet, daß die Transferfunktion die Verstärkung des Generators über einem erwarteten Arbeitsdrehzahl- und -lastbereich des Generators repräsentiert.

2. Verfahren nach Anspruch 1, das weiterhin dadurch gekennzeichnet ist, daß die Transferfunktion (32) eine Exponentialfunktion ist.

3. Verfahren nach Anspruch 1, das weiterhin dadurch gekennzeichnet ist, daß die Transferfunktion (32) die Form

$$V_o = Ce^{V_{in}/K}$$

hat, wobei $V_{in}$ das Steuersignal ist, $V_o$ das modifizierte Steuersignal ist und C und K Konstanten sind.

4. Verfahren nach Anspruch 1, das weiterhin dadurch gekennzeichnet ist, daß die Transferfunktion (32) die Form

$$V_o = V_{in}^n/K$$

hat, wobei $V_{in}$ das Steuersignal ist, $V_o$ das modifizierte Steuersignal ist und n und K Konstanten sind.

5. Spannungsregler zum Regeln der Ausgangsspannung eines Stromgenerators mit variabler Drehzahl, welcher aufweist: eine Einrichtung (14) zum Erzeugen eines ersten Signals ($V_1$), das die Ist-Ausgangs-größe eines Generators (10) repräsentiert, und eine Einrichtung (20) zum Kombinieren des ersten Signals ($V_1$) mit einem Referenzsignal ($V_{ref}$), um ein Steuersignal ($V_{in}$) zu erhalten, das sich im Verhältnis zu der Differenz zwischen einer Soll-Ausgangsgröße des Generators (10) und der Ist-Ausgangsgröße des Generators ändert; mit einer Einrichtung (26) zum Modifizieren des Steuersignals mittels einer nichtlinearen Transferfunktion (32) und mit einer Einrichtung (28) zum Steuern des Stroms in einer Erregerfeldwicklung des Generators (10) auf das modifizierte Steuersignal ($V_o$) hin, wodurch die Ist-Ausgangsgröße dazu gebracht wird, sich der Soll-Ausgangsgröße zu nähern, dadurch gekennzeichnet, daß die Transferfunktion die Verstärkung des Generators über einem erwarteten Arbeitsdrehzahl- und -lastbereich des Generators repräsentiert.

6. Spannungsregler nach Anspruch 5, der weiterhin dadurch gekennzeichnet ist, daß die Transferfunktion (32) eine Exponentialfunktion ist.

7. Spannungsregler nach Anspruch 5, der weiterhin dadurch gekennzeichnet ist, daß die Transferfunktion (32) die Form

6

$$V_o = Ce^{V_{in}/K}$$

hat, wobei $V_{in}$ das Steuersignal ist, $V_o$ das modifizierte Steuersignal ist und C und K Konstanten sind.

8. Spannungsregler nach Anspruch 5, der weiterhin dadurch gekennzeichnet ist, daß die Transferfunktion (32) die Form

$$V_o = V_{in}^n/K$$

hat, wobei $V_{in}$ das Steuersignal ist, $V_o$ das modifizierte Steuersignal ist und n und K Konstanten sind.

**Revendications**

1. Procédé de régulation de la tension de sortie d'un générateur électrique (10) à vitesse variable, ledit procédé comprenant les étapes consistant à: produire un premier signal ($V_1$) représentatif de la tension de sortie réelle du générateur (10); et combiner ledit premier signal ($V_1$) avec un signal de référence ($V_{ref}$) pour obtenir un signal de commande ($V_{in}$) qui varie proportionnellement à la différence entre une tension de sortie voulue dudit générateur et ladite tension de sortie réelle dudit générateur; comportant les étapes consistant à modifier ledit signal de commande ($V_{in}$) par une fonction de transfert non linéaire (32) et à commander l'intensité dans un enroulement de champ d'excitation dudit générateur (10) en réponse au signal de commande modifié ($V_o$), en amenant de ce fait ladite tension de sortie réelle à s'approcher de ladite tension de sortie voulue; caractérisé en ce que la fonction de transfert est représentative du gain dudit générateur sur une plage de charge et de vitesse de fonctionnement attendues dudit générateur.

2. Procédé selon la revendication 1, caractérisé en outre en ce que ladite fonction de transfert (32) est une fonction exponentielle.

3. Procédé selon la revendication 1, caractérise en outre en ce que ladite fonction de transfert (32) s'écrit sous la forme

$$V_o = Ce^{V_{in}/k},$$

où $V_{in}$ est le signal de commande, $V_o$ est le signal de commande modifié et C et K sont des constantes.

4. Procédé selon la revendication 1, caractérise en outre en ce que ladite fonction de transfert (32) s'écrit sous la forme

$$V_o = V_{in}^n/K,$$

où $V_{in}$ est le signal de commande, $V_o$ est le signal de commande modifié et n et K sont des constantes.

5. Régulateur de tension pour réguler la tension de sortie d'un générateur électrique à vitesse variable, ledit régulateur de tension comportant: un moyen (14) pour produire un premier signal ($V_1$) représentatif de la tension de sortie réelle d'un générateur (10); et un moyen (20) pour combiner ledit premier signal ($V_1$) avec un signal de référence ($V_{ref}$) pour obtenir un signal de commande ($V_{in}$) qui varie proportionnellement à la différence entre une tension de sortie voulue dudit générateur (10) et ladite tension de sortie réelle dudit générateur; comprenant un moyen (26) pour modifier ledit signal de commande par une fonction de transfert non linéaire (32) et un moyen (28) pour commander l'intensité dans un enroulement de champ d'excitation dudit générateur (10) en réponse au signal de commande modifié ($V_o$), en amenant de ce fait ladite tension de sortie réelle à s'approcher de ladite tension de sortie voulue, caractérisé en ce que la fonction de transfert est représentative du gain dudit générateur sur une plage de charge et de vitesse de fonctionnement attendues dudit générateur.

**6.** Régulateur de tension selon la revendication 5, caractérisé en outre en ce que ladite fonction de transfert (32) est une fonction exponentielle.

**7.** Régulateur de tension selon la revendication 5, caractérisé en outre en ce que ladite fonction de transfert (32) s'écrit sous la forme

$$V_o = Ce^{V_{in}/k},$$

où V-in est le signal de commande, $V_o$ est le signal de commande modifié et C et K sont des constantes.

**8.** Régulateur de tension selon la revendication 5, caractérisé en outre en ce que ladite fonction de transfert (32) s'écrit sous la forme

$$V_o = V_{in}^n/K,$$

où $V_{in}$ est le signal de commande, $V_o$ est le signal de commande modifié et n et K sont des constantes.

FIG.1

FIG.4

FIG.2

FIG.3